# EUROPÄISCHE PATENTSCHRIFT

(11) **EP 2 909 650 B1**
(45) Veröffentlichungstag und Bekanntmachung des Hinweises auf die Patenterteilung: **09.10.2019**
(21) Anmeldenummer: 13763222.0
(22) Anmeldetag: 13.09.2013
(51) Int. Cl.: G01S 7/486, G01S 17/93

(54) **OPTOELEKTRONISCHE DETEKTIONSEINRICHTUNG MIT REDUZIERTER ENERGIEAUFNAHME, KRAFTFAHRZEUG UND ENTSPRECHENDES VERFAHREN**
OPTOELECTRONIC DETECTION DEVICE HAVING REDUCED ENERGY CONSUMPTION, MOTOR VEHICLE AND CORRESPONDING METHOD
SYSTÈME DE DÉTECTION OPTOÉLECTRONIQUE À CONSOMMATION D'ÉNERGIE RÉDUITE, VÉHICULE À MOTEUR ET PROCÉDÉ CORRESPONDANT

(30) Priorität: 17.10.2012 DE 102012020288
(43) Veröffentlichungstag der Anmeldung: 26.08.2015
(73) Patentinhaber: Valeo Schalter und Sensoren GmbH, 74321 Bietigheim-Bissingen (DE)
(72) Erfinder: NIES, Juergen, 75181 Pforzheim (DE); LAMMEL, Gerd, 75223 Niefern-Oeschelbronn (DE); SCHENK, Jochen, 74255 Roegheim (DE)
(74) Vertreter: Withopf, Kristina
(86) Internationale Anmeldenummer: PCT/EP2013/069039
(87) Internationale Veröffentlichungsnummer: WO 2014/060156

(56) Entgegenhaltungen:
- WO-A1-02/057714
- DE-A1- 2 245 508
- US-A- 4 077 718
- US-A- 5 220 164
- US-A- 5 933 224
- US-A1- 2001 052 844

## Beschreibung

Die Erfindung betrifft eine abtastende optoelektronische Detektionseinrichtung für ein Kraftfahrzeug. Sie umfasst einen optischen Sender zum Aussenden elektromagnetischer Strahlen in einen Umgebungsbereich des Kraftfahrzeugs. Der Sender ist dazu ausgebildet, innerhalb eines Messzyklus der Detektionseinrichtung für eine Vielzahl von Abtastwinkeln innerhalb eines Abtastwinkelbereiches jeweils einen Sendestrahl, insbesondere einen Laserimpuls, auszusenden. Nach jedem Messzyklus folgt jeweils eine Sendepause vorgegebener Zeitdauer. Die Detektionseinrichtung umfasst auch einen optischen Empfänger, der zumindest einen Photodetektor zum Empfangen von in dem Umgebungsbereich reflektierten Strahlen und zum Bereitstellen eines elektrischen Empfangssignals abhängig von den empfangenen Strahlen sowie einen Verstärker aufweist, der zum Verstärken des elektrischen Empfangssignals ausgebildet ist. Eine elektronische Auswerteeinrichtung detektiert ein Zielobjekt in dem Umgebungsbereich abhängig von dem verstärkten Empfangssignal. Mit Hilfe einer Spannungsversorgungseinrichtung wird eine elektrische Versorgungsspannung für den Empfänger bereitgestellt. Die Erfindung betrifft außerdem ein Kraftfahrzeug mit einer solchen Detektionseinrichtung sowie ein entsprechendes Verfahren.

Unterschiedlichste Fahrerassistenzsysteme zur Detektion von Objekten werden zunehmend im Automobilbereich eingesetzt, um den Fahrer beim Führen seines Kraftfahrzeugs zu unterstützen. Laser-basierte Systeme (auch unter der Bezeichnung "Lidar" bzw. "Light Detection and Ranging" bekannt) ermöglichen dabei die Erkennung von Objekten in einer relativ großen Reichweite bis über 100 m vom Fahrzeug mit einer sehr hohen Messgenauigkeit. Sie werden bevorzugt im vorderen Bereich des Fahrzeugs platziert, beispielsweise hinter der Windschutzscheibe oder aber am Kühlergrill, um u.a. die Zeit bis zum Aufprall (Time to Collision, TTC) zu ermitteln. Solche Systeme können aber auch in seitlichen Bereichen des Fahrzeugs platziert werden, um insbesondere den Totwinkelbereich zu überwachen.

Vorzugsweise richtet sich das Interesse vorliegend auf einen Laserscanner, welcher nach dem Lichtlaufzeitprinzip arbeitet und typischerweise einen optischen Sender aufweist, der kurze Laserimpulse aussendet, die über einen drehbaren Spiegel so abgelenkt werden, dass eine Abtastung des gesamten Sichtfelds innerhalb eines vorbestimmten Abtastwinkelbereiches stattfindet. Der Laserscanner erfasst dabei typischerweise den Umgebungsbereich vor dem Kraftfahrzeug. Pro Abtastwinkel bzw. pro Winkelschritt wird dabei jeweils ein Laserimpuls ausgesendet. Im selben Winkelschritt, insbesondere ohne dass der Spiegel bewegt wird, werden die reflektierten Strahlen mittels eines Empfängers empfangen, und es wird ein elektrisches Empfangssignal bereitgestellt. Dieses elektrische Signal wird analysiert. Werden Echos bzw. Pulse im Empfangssignal erkannt, so sind diese grundsätzlich auf Reflektionen des ausgesendeten Laserimpulses an Zielobjekten in der Umgebung zurückzuführen. Die Zeitdauer zwischen dem Aussenden des Laserimpulses und dem Empfangen des Echos ist proportional zur Distanz zum Objekt. Diese Laufzeit wird gemessen und als Ergebnis der Entfernungsmessung für diesen Winkelschritt abgelegt. Die Abtastung des Sichtfelds erfolgt dabei üblicherweise in Azimutrichtung bzw. in horizontaler Richtung, so dass der Spiegel beispielsweise einmal von links nach rechts verschwenkt und hierbei z.B. von einem Anfangswinkel schrittweise bis hin zu einem Endabtastwinkel bewegt wird.

Ein Laserscanner für Kraftfahrzeuge ist beispielsweise aus dem Dokument DE 10 2010 047 984 A1 bekannt. Der abtastende optische Entfernungssensor umfasst einen Laser als optischen Sender, mindestens einen Detektor als optischen Empfänger sowie eine Umlenkeinheit, welche mit einem ersten Spiegel eine Laserstrahlung auf die zu vermessende Szene umlenkt und mit einem zweiten Spiegel die von Objekten zurück gestreuten Laserimpulse auf den mindestens einen Detektor umlenkt. Der erste und der zweite Spiegel sind auf einer gemeinsamen drehbaren Achse angeordnet, welche von einer Antriebseinheit angetrieben wird.

Aus der US 2001/0052844 A1 sind ein Verfahren und eine Vorrichtung zur Objekterkennung mit einem Laserscanner bekannt.

In der WO 02/057714 A1 ist ein Bilderfassungssystem zum Erfassen von dreidimensionalen Bildern beschrieben.

Im Patent US 5,933,224 ist ein handgeführtes Entfernungsmessgerät offenbart.

Das Patent US 5,220,164 beschreibt einen integrierten Bildgebungs- und Entfernungsmessempfänger.

In der DE 22 45 508 ist ein Verfahren zur Arbeitspunktregelung von Halbleiter-Avalanche-Fotodioden offenbart.

Im Patent US 4,077,718 ist ein Empfänger für ein optisches Entfernungsmessgerät beschreiben.

Der Empfänger eines Laserscanners beinhaltet üblicherweise einerseits einen Photodetektor, typischerweise mit einer oder mehreren Avalanche-Photodioden, sowie andererseits auch einen Verstärker, mittels welchem das elektrische Empfangssignal bzw. das von dem Photodetektor bereitgestellte Signal verstärkt wird. Als Verstärker kann grundsätzlich ein Transimpedanzverstärker eingesetzt werden. Der Verstärkungsfaktor ist typischerweise relativ hoch, um auch schwach reflektierende Zielobjekte in großer Entfernung erfassen zu können. Deshalb ist die Stromaufnahme eines solchen Verstärkers im Betrieb der Detektionseinrichtung entsprechend hoch. Werden mehrere Photodetektoren eingesetzt, so erzeugt jeder Photodetektor ein entsprechendes elektrisches Empfangssignal, welches unabhängig von den anderen Empfangssignalen verstärkt werden muss. Entsprechend muss auch ein Verstärker eingesetzt werden, der mehrere Verstärkungskanäle aufweist und welcher somit in der Lage ist, mehrere Empfangssignale separat voneinander zu verstärken. Der Verstärker kann somit grundsätzlich mehrere einzelne Empfangsverstärker umfassen, welche gegebenenfalls auch in ein einziges gemeinsames Bauteil integriert werden können. Mehrere Photodetektoren werden deshalb benötigt, um einen gewünschten Öffnungswinkel der Detektionseinrichtung in Elevationsrichtung von beispielsweise 3,2° zu erzielen. Dabei werden die einzelnen Photodetektoren übereinander bzw. entlang der Hochrichtung verteilt angeordnet. Die relativ hohe Stromaufnahme des gesamten Empfängers führt zwangsläufig auch zu einer erhöhten Aufheizung des gesamten Systems, was einerseits zur Einschränkung des Einsatzbereiches im Fahrzeug bei hohen Umgebungstemperaturen und andererseits auch dazu führt, dass gegebenenfalls entsprechende Maßnahmen zur Kühlung der Detektionseinrichtung getroffen werden müssen.

Es ist Aufgabe der Erfindung, eine Lösung aufzuzeigen, wie bei einer Detektionseinrichtung der eingangs genannten Gattung die Leistungsaufnahme der Detektionseinrichtung und somit auch die Wärmeerzeugung im Vergleich zum Stand der Technik reduziert werden kann.

Diese Aufgabe wird erfindungsgemäß durch eine Detektionseinrichtung, durch ein Kraftfahrzeug sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Detektionseinrichtung ist zur Detektion eines Zielobjektes in einem Umgebungsbereich eines Kraftfahrzeugs ausgebildet. Die Detektionseinrichtung hat einen optischen Sender, einen optischen Empfänger, eine elektronische Auswerteeinrichtung sowie eine Spannungsversorgungseinrichtung. Der Sender ist zum Abtasten des Umgebungsbereiches, insbesondere in Azimutrichtung, in der Weise ausgebildet, dass innerhalb eines einzelnen Messzyklus der Detektionseinrichtung für eine Vielzahl von Abtastwinkeln innerhalb eines Abtastwinkelbereiches jeweils ein Sendestrahl, insbesondere ein Strahlimpuls, bevorzugt ein Laserimpuls, ausgesendet wird. Nach jedem Messzyklus folgt dann jeweils eine Sendepause, wobei die Messzyklen bevorzugt periodisch wiederholt werden. Der Empfänger hat zumindest einen Photodetektor zum Empfangen von im Umgebungsbereich reflektierten Strahlen und zum Bereitstellen eines elektrischen Empfangssignals abhängig von den empfangenen Strahlen. Der Empfänger hat außerdem einen Verstärker, der zum Verstärken des elektrischen Empfangssignals ausgebildet ist. Die Auswerteeinrichtung detektiert das Zielobjekt in dem Umgebungsbereich abhängig von dem verstärkten Empfangssignal. Die Spannungsversorgungseinrichtung stellt eine elektrische Versorgungsspannung für den Empfänger bereit. Die Detektionseinrichtung umfasst Trennmittel, welche für zumindest ein Abschaltzeitintervall während zumindest einer Sendepause zwischen zwei benachbarten Messzyklen im Betrieb der Detektionseinrichtung zumindest eine Komponente des Empfängers von der Versorgungsspannung elektrisch trennt.

Die Erfindung macht sich dabei die Tatsache zunutze, dass der Empfänger, und insbesondere der Verstärker, nicht kontinuierlich im Betrieb benötigt werden, sondern nur innerhalb der Messzyklen, wenn die Sendestrahlen ausgesendet werden und die Umgebung vermessen bzw. abgetastet wird, sowie gegebenenfalls für eine Rauschmessung innerhalb der Sendepausen. Wird der Empfänger nicht benötigt bzw. keine Messung momentan durchgeführt, so kann dieser kurzzeitig abgeschaltet bzw. von der Versorgungsspannung getrennt werden. Auf diese Art und Weise kann einerseits elektrische Energie gespart werden, weil der Empfänger lediglich in bestimmten Zeiten betrieben wird. Andererseits wird somit auch die Wärmeerzeugung reduziert, so dass die Detektionseinrichtung auch bei hohen Umgebungstemperaturen im Kraftfahrzeug zuverlässig betrieben werden kann. Es brauchen auch keine zusätzlichen Schutzmaßnahmen zum Schutz vor Wärme getroffen zu werden.

Vorzugsweise sind die Trennmittel dazu ausgebildet, den Verstärker als Komponente des Empfängers von seiner elektrischen Versorgungsspannung zu trennen. Somit wird der Verstärker des Empfängers kurzeitig im Betrieb der Detektionseinrichtung abgeschaltet. Es ist nämlich grundsätzlich der Verstärker, welcher typischerweise relativ viel elektrische Leistung benötigt, um das elektrische Empfangssignal entsprechend zu verstärken und somit zu ermöglichen, dass auch schwach reflektierende Zielobjekte in großer Entfernung detektiert werden können.

Optional kann ergänzend oder alternativ auch der zumindest eine Photodetektor von seiner Versorgungsspannung getrennt werden. Diese Versorgungsspannung ist dann eine Biasspannung, mit welcher der Photodetektor, insbesondere ein Avalanche-Detektor, elektrisch vorgespannt wird.

Der Sender umfasst bevorzugt ein drehbar gelagertes bewegliches Abtastelement, insbesondere einen Umlenkspiegel, zum Ausrichten der Sendestrahlen auf den jeweiligen Abtastwinkel. Das bewegliche Element ist bevorzugt von einer Anfangswinkelstellung, welche einem ersten Abtastwinkel am Rande des Abtastwinkelbereiches entspricht, in eine Endwinkelstellung bewegbar, welche einem letzten Abtastwinkel am gegenüberliegenden Rande des Abtastwinkelbereiches entspricht. Es erfolgt beispielsweise eine schrittweise Bewegung des Elements. Die Abtastung kann insbesondere in horizontaler Richtung und somit in Azimutrichtung erfolgen. Die jeweilige Sendepause zwischen den Messzyklen ist dann bevorzugt durch eine Zeitdauer vorgegeben, während welcher das bewegliche Abtastelement von der Endwinkelstellung wieder in die Anfangswinkelstellung bewegbar ist. Diese Ausführungsform macht sich die Tatsache zunutze, dass der Rücklauf des beweglichen Elements typischerweise ein wenig länger als ein einzelner Messzyklus dauert, weil der Abtastwinkelbereich bevorzugt kleiner als 180° ist und das bewegliche Element typischerweise immer in die gleiche Drehrichtung gedreht wird und somit der Rücklaufwinkelbereich größer als 180° ist. Das Abschaltzeitintervall, für welche die Komponente des Empfängers vor der Versorgungsspannung getrennt wird, kann also grundsätzlich gleich oder größer als ein einzelner Messzyklus dauern. Beträgt der gesamte Abtastwinkelbereich beispielsweise 145°, so beträgt der übrige Winkelbereich des Rücklaufs des beweglichen Elements bei einem nur in einer Richtung drehbaren Element insgesamt 215°. Bei einer konstanten Geschwindigkeit des Elements kann somit erreicht werden, dass das Abschaltzeitintervall sogar ein wenig länger als die Zeitdauer eines einzelnen Messzyklus ist oder beispielsweise die gleiche Zeitdauer wie ein einzelner Messzyklus aufweist. Bei einem Verhältnis des Abschaltzeitintervalls zur Zeitdauer eines einzelnen Messzyklus von beispielsweise 50/50 kann die Verlustleistung des Empfängers halbiert werden. Diese Einsparung erhöht sich zusätzlich durch die Verringerung der Verlustleistung von vorgeschalteten Netzteilen und Schutzdioden wegen geringerer Last.

Die Trennmittel können auch so ausgebildet sein, dass die Komponente des Empfängers von der Versorgungsspannung für eine überwiegende Zeitdauer einer Sendepause elektrisch getrennt wird. Entsprechend sind somit auch die benötigte elektrische Leistung und die Wärmeerzeugung deutlich reduziert.

Das Abschalten der Komponente des Empfängers kann grundsätzlich während beliebiger Sendepausen, nicht zwangsläufig während jeder Sendepause, erfolgen, Allgemein kann vorgesehen sein, dass die Trennmittel die Komponente des Empfängers von der Versorgungsspannung innerhalb vorbestimmter und somit fest vorgegebener oder vorgebbarer Sendepausen, insbesondere während jeder oder jeder n-ten Sendepause, oder aber innerhalb zufällig im Betrieb festgelegter Sendepausen jeweils für zumindest ein Abschaltzeitintervall trennt. n kann dabei in einem Wertebereich von 2 bis 10 liegen. Außerhalb der Abschaltzeitintervalle kann dann insbesondere eine Rauschmessung bzw. Erfassung des Rauschpegels des elektrischen Empfangssignals erfolgen. Einerseits kann somit die Leistungsaufnahme reduziert werden; andererseits kann somit auch eine Messung des Rauschpegels ermöglicht werden.

Das Abschaltzeitintervall, insbesondere seine Länge und/oder sein Anfangszeitpunkt innerhalb der Sendepause, kann ein vorgegebenes bzw. fest vordefiniertes Zeitintervall sein.

Alternativ kann jedoch auch vorgesehen sein, dass die Trennmittel dazu ausgebildet sind, das Abschaltzeitintervall, insbesondere seine Länge und/oder seinen Anfangszeitpunkt innerhalb der Sendepause, zufällig im Betrieb zu bestimmen.

Vorzugsweise umfasst die Detektionseinrichtung eine Messeinrichtung zum Erfassen eines Rauschpegels des Empfangssignals. Die Messeinrichtung kann den Rauschpegel vorzugsweise während zumindest eines von dem Abschaltzeitintervall verschiedenen bzw. zeitlich getrennten Messzeitintervalls innerhalb einer Sendepause erfassen. Die Rauschmessung erfolgt somit vorzugsweise auch innerhalb einer Sendepause, und nicht in den Messzyklen. Bei dieser Ausführungsform wird somit ein Kompromiss zwischen der Reduktion der Leistungsaufnahme einerseits und der in der Regel ohnehin benötigten Rauschmessung andererseits getroffen. Es kann sowohl die Leistungsaufnahme im Vergleich zum Stand der Technik reduziert werden als auch der Rauschpegel des verstärkten Empfangssignals gemessen werden.

Vorzugsweise wird der Rauschpegel immer dann während einer Sendepause erfasst, wenn kein Abschaltzeitintervall momentan vorliegt und die Komponente somit mit der elektrischen Versorgungsspannung gekoppelt ist. Die Sendepause setzt sich somit vorzugsweise im Wesentlichen aus dem Abschaltzeitintervall und dem Messzeitintervall zusammen, deren Verhältnis grundsätzlich vorgegeben oder aber zufällig im Betrieb bestimmt werden kann.

Wird das Abschaltzeitintervall zufällig bestimmt, so ergibt sich auch zwangsläufig die Rauschmessung in zufälligen Messzeitintervallen.

Vorzugsweise kann sich das Messzeitintervall unmittelbar an den Messzyklus zeitlich anschließen. Dies hat den Vorteil, dass die Komponente des Empfängers zwischen dem Messzyklus und der Rauschmessung nicht abgeschaltet werden muss. Somit erübrigt sich auch eine separate Aktivierung des Empfängers speziell für eine Rauschmessung mit den damit verbundenen Nachteilen hinsichtlich einer Anlaufzeit, welche der Empfänger, speziell der Verstärker, bei jedem Einschalten benötigt. Es ist grundsätzlich gleichwertig, ob das Messzeitintervall direkt nach einem Messzyklus oder aber direkt vor einem Messzyklus vorgesehen ist.

Die Erfindung betrifft außerdem ein Kraftfahrzeug mit einer erfindungsgemäßen Detektionseinrichtung sowie ein Verfahren zum Betreiben einer abtastenden optoelektronischen Detektionseinrichtung mit den Merkmalen des unabhängigen Verfahrensanspruchs.

Die mit Bezug auf die erfindungsgemäße Detektionseinrichtung vorgestellten bevorzugten Ausführungsformen und deren Vorteile gelten entsprechend für das erfindungsgemäße Kraftfahrzeug sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer und abstrakter Darstellung den prinzipiellen Aufbau einer abtastenden optoelektronischen Detektionseinrichtung nach einer Ausführungsform der Erfindung;
- Fig. 2: in schematischer Darstellung ein Kraftfahrzeug mit einer Detektionseinrichtung gemäß einer Ausführungsform der Erfindung;
- Fig. 3: in schematischer Darstellung ein Blockschaltbild einer Detektionseinrichtung gemäß einer Ausführungsform der Erfindung; und
- Fig. 4: zeitliche Signalverläufe, wobei ein Verfahren gemäß einer Ausführungsform der Erfindung näher erläutert wird.

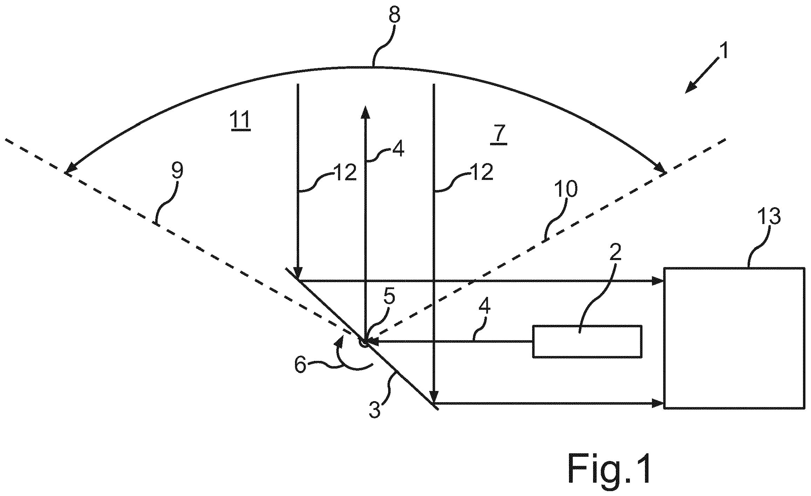

Eine in Fig. 1 dargestellte Detektionseinrichtung 1 hat einen Sender, welcher eine optische Quelle 2, insbesondere einen Laser, sowie ein bewegliches Abtastelement 3 umfasst. Die Quelle 2 kann dabei z.B. eine Laserdiode sein. Die Quelle 2 ist zum Erzeugen von Sendestrahlen, insbesondere Laserimpulsen 4, ausgebildet, welche mittels des beweglichen Abtastelements 3 umgelenkt werden. Das Abtastelement 3 ist z.B. ein Mikrospiegel. Es ist um eine Drehachse 5 drehbar gelagert und wird schrittweise um diese Drehachse 5 herum und vollständig umlaufend gedreht, nämlich beispielsweise gemäß der Pfeildarstellung 6. Dies bedeutet insbesondere, dass das Abtastelement 3 um die Drehachse 5 ausschließlich stets in eine Drehrichtung 6 gedreht wird, nicht jedoch in die entgegengesetzte Richtung.

Die Detektionseinrichtung 1 hat ein Sichtfeld 7, welches in Azimutrichtung und somit in horizontaler Richtung durch einen Öffnungswinkel bzw. Abtastwinkelbereich 8 definiert ist. Der Abtastwinkelbereich 8 ist zwischen einem ersten Abtastwinkel 9 (bezüglich einer Referenzachse) und einem letzten Abtastwinkel 10 definiert. Ein Umgebungsbereich 11 wird dabei in Azimutrichtung so abgetastet, dass für eine Vielzahl von Abtastwinkeln innerhalb des Abtastwinkelbereiches 8 und somit zwischen den Abtastwinkeln 9, 10 jeweils ein Laserimpuls 4 durch den Sender 2,3 ausgesendet wird. Hierbei wird das Abtastelement 3 schrittweise von einer Anfangswinkelstellung bis hin zu einer Endwinkelstellung bewegt, wobei die Anfangswinkelstellung dem ersten Abtastwinkel 9 und die Endwinkelstellung dem letzten Abtastwinkel 10 entspricht. Dieses Abtasten des Umgebungsbereiches 11 zwischen den beiden Grenzabtastwinkeln 9, 10 erfolgt während eines einzelnen Messzyklus der Detektionseinrichtung 9. Nach jedem Messzyklus wird dann das Abtastelement 3 weiter in die gleiche Drehrichtung 6 bis hin zur Anfangswinkelstellung bewegt, in welcher ein neuer Messzyklus beginnt. Die Messzyklen werden somit periodisch wiederholt, wobei die Zeitdauer eines einzelnen Messzyklus durch die Abtastfrequenz und die Winkelauflösung sowie die Größe des Abtastwinkelbereichs 8 vorgegeben wird. Nach jedem Messzyklus folgt somit jeweils eine Sendepause, in welcher keine Laserimpulse ausgesendet werden. Auch die Zeitdauer der Sendepausen ist somit durch die Scanfrequenz und Winkelauflösung vorgegeben und entspricht der Rücklaufzeit des Elements 3.

Die ausgesendeten Strahlen 4 werden im Umgebungsbereich 11 an Zielobjekten reflektiert und gelangen dann wieder zur Detektionseinrichtung 1 in Form von Zielechos. Die reflektierten Strahlen 12 können ebenfalls durch das Abtastelement 3 oder aber ein anderes Element direkt auf einen optischen Empfänger 13 umgelenkt werden. Alternativ kann der Empfangsstrahlengang auch ohne ein bewegliches Abtastelement 3 auskommen, und die Strahlen 12 können direkt auf den Empfänger 13 einfallen, gegebenenfalls über eine entsprechende Optik.

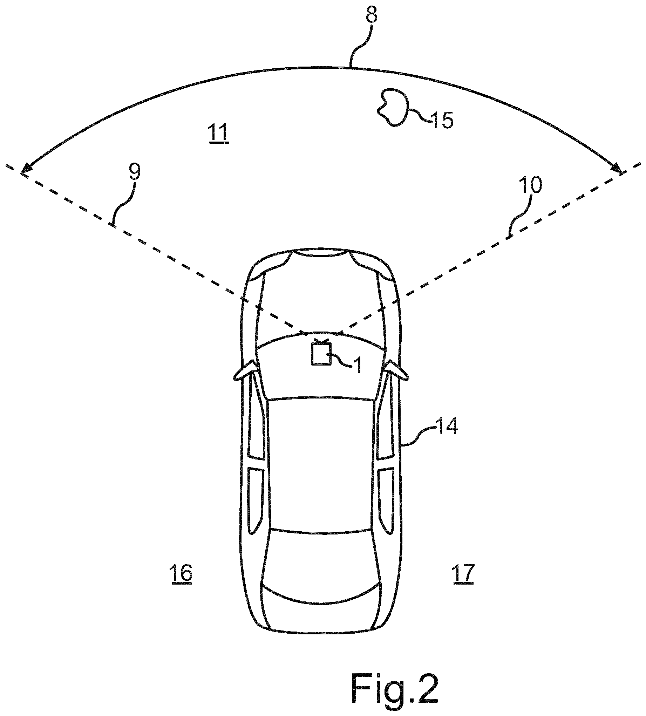

In Fig. 2 ist eine solche Detektionseinrichtung 1 dargestellt, welche in ein Kraftfahrzeug 14, insbesondere einen Personenkraftwagen, integriert ist. Die Detektionseinrichtung 1 kann beispielsweise hinter der Windschutzscheibe platziert werden. Sie erfasst dann den Umgebungsbereich 11 in Fahrtrichtung vor dem Kraftfahrzeug 14. Es können somit Zielobjekte 15 detektiert werden, die sich vor dem Kraftfahrzeug 14 befinden und gegebenenfalls eine Gefahr darstellen könnten. Eine solche Detektionseinrichtung 1 kann ergänzend oder alternativ in seitlichen Bereichen des Fahrzeugs 14, insbesondere im Bereich der jeweiligen Außenspiegel, platziert werden, um die jeweiligen Totwinkelbereiche 16, 17 zu überwachen.

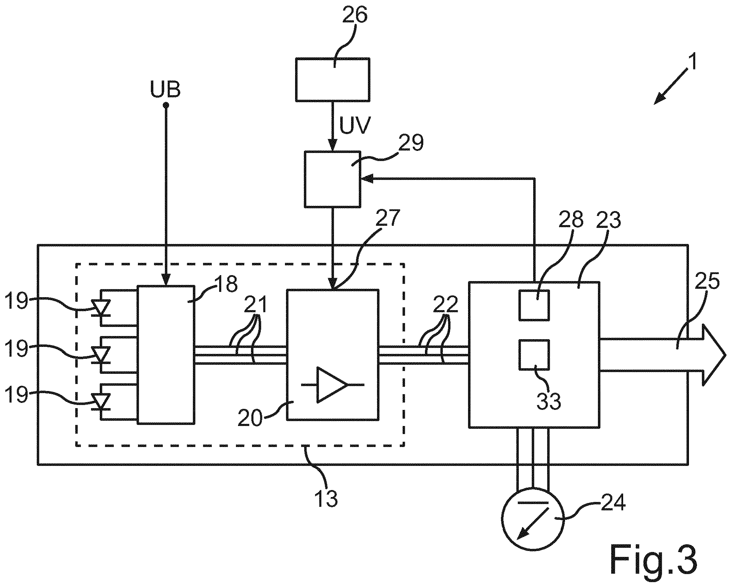

Ein Blockschaltbild einer Detektionseinrichtung 1 gemäß einer Ausführungsform der Erfindung ist in Fig. 3 dargestellt. Gezeigt ist dabei der Empfänger 13. Der Empfänger 13 umfasst einen Photodetektor 18 mit drei Kanälen bzw. mit drei Avalanche-Photodioden 19, welche in Fahrzeughochrichtung verteilt angeordnet sind. Dies bedeutet, dass die Photodioden 19 übereinander liegen bzw. in Elevationsrichtung verteilt sind. Somit kann in Elevationsrichtung (senkrecht zur Zeichnungsebene gemäß Fig. 2) ein Öffnungswinkel der Detektionseinrichtung 1 von ungefähr 3,2° erzielt werden.

Mit dem Photodetektor 18 ist ein Verstärker 20 elektrisch gekoppelt. Der Photodetektor 18 bzw. jede Photodiode 19 stellt jeweils ein elektrisches Empfangssignal 21 abhängig von den empfangenen Lichtstrahlen 12 bereit. Die Empfangssignale 21 werden dem Verstärker 20 zugeführt, welcher alle Empfangssignale 21 unabhängig voneinander verstärkt. Der Verstärker 20 kann dabei z.B. der sogenannte Transimpedanzverstärker sein. Verstärkte Empfangssignale 22 gibt der Verstärker 20 dann an eine elektronische Auswerteeinrichtung 23 ab, welche die Empfangssignale 22 zunächst beispielsweise mittels eines Analog-Digital-Konverters abtastet und die digitalen Empfangssignale dann mittels eines digitalen Signalprozessors auswertet. Die Auswertung kann aber auch an einem analogen Signal erfolgen. Die Auswerteeinrichtung 23 ist dabei mit einem Winkelgeber 24 gekoppelt und kennt somit auch den aktuellen Abtastwinkel des Senders.

Anhand der Empfangssignale 22 kann die Auswerteeinrichtung 23 das Zielobjekt 15 im Umgebungsbereich 11 detektieren, wobei die Höhe der Empfangssignale beispielsweise mit einer Detektionsschwelle verglichen werden kann.

Das Ergebnis der Objekterfassung wird dann von der Detektionseinrichtung 1 ausgegeben, wie dies in Fig. 3 mit 25 schematisch angedeutet ist. Das Ergebnis kann z.B. an ein Fahrzeugsteuergerät übermittelt werden.

Die Avalanche-Photodioden 19 werden bekanntlich mit einer Biasspannung UB elektrisch vorgespannt. Eine Versorgungsspannung UV für den Verstärker 20 wird mittels einer elektrischen Spannungsversorgungseinrichtung 26 bereitgestellt. Diese Versorgungsspannung UV kann beispielsweise aus einer Bordnetzspannung des Kraftfahrzeugs 14 bereitgestellt bzw. im Bordnetz abgegriffen werden. Der Verstärker 20 weist dabei einen Versorgungsanschluss 27 auf, an welchen die Versorgungsspannung UV angelegt werden kann, nämlich bezüglich eines Bezugspotentials (Masse).

Die Spannungsversorgungseinrichtung 26 kann somit im einfachsten Fall durch einen Anschluss gebildet sein, der mit dem Bordnetz des Kraftfahrzeugs 14 gekoppelt bzw. an die Bordnetzspannung angeschlossen wird. Gegebenenfalls kann die Spannungsversorgungseinrichtung 26 jedoch auch weitere elektrische Komponenten umfassen, wie beispielsweise einen Spannungswandler und dergleichen.

Die Detektionseinrichtung 1 umfasst des Weiteren auch Trennmittel, welche einerseits eine z.B. in die Auswerteeinrichtung 23 integrierte Steuereinrichtung 28 sowie einen elektrischen Schalter 29 umfassen. Der Schalter 29 kann dabei der sogenannte Highside-Schalter sein, insbesondere ein Feldeffekttransistor. Der Schalter 29 liegt im Schaltungszweig zwischen der Spannungsversorgungseinrichtung 26 einerseits und dem Versorgungsanschluss 27 andererseits. Mit dem Schalter 29 kann somit der Verstärker 20 von der Versorgungsspannung UV elektrisch getrennt werden. Der Schalter 29 wird dabei mittels der Steuereinrichtung 28 angesteuert.

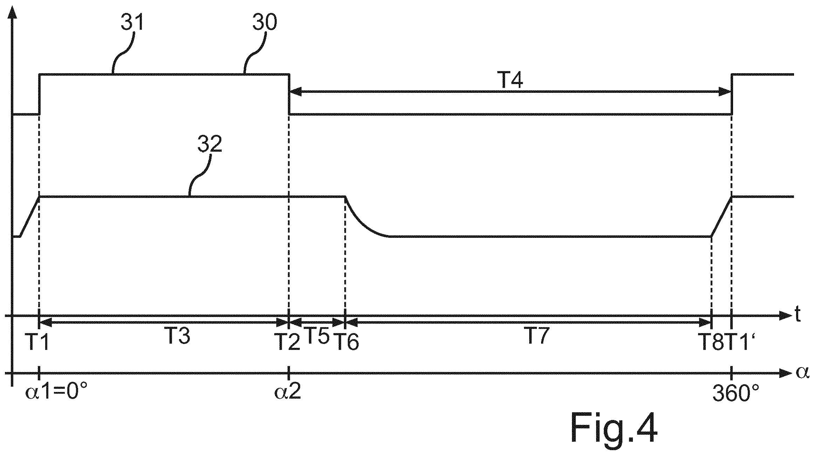

In den oben genannten Sendepausen wird der Verstärker 20 für zumindest ein Abschaltzeitintervall von der Versorgungsspannung UV getrennt und somit abgeschaltet. Ein beispielhaftes Verfahren wird nun Bezug nehmend auf Fig. 4 näher erläutert:
In Fig. 4 sind zwei Steuerverläufe über der Zeit t sowie über dem Winkel α des Abtastelements 3 dargestellt. Einerseits ist dabei ein Verlauf 30 dargestellt, welcher den Betrieb des Senders 2, 3 symbolisiert bzw. die Messzyklen veranschaulichen soll. Ein Messzyklus beginnt dabei zum Zeitpunkt T1 und dauert bis zum Zeitpunkt T2. Ein Messzyklus entspricht dabei einem Zeitintervall T3. Innerhalb des Zeitintervalls T3 sendet die Quelle 2 für jeden Abtastwinkel jeweils einen Laserimpuls aus. Das Element wird von der Anfangswinkelstellung α1 (zum Beispiel Referenzwinkel von 0°) in die Endwinkelstellung α2 bewegt, wie dies mit einem Impuls 31 des Signals 30 angedeutet ist. Die Quelle 2 wird während des Zeitintervalls T3 betrieben und zum Zeitpunkt T2 abgeschaltet. Zum Zeitpunkt T2 beginnt dann eine Sendepause T4, welche bis zum nächsten Zeitpunkt T1' dauert. Innerhalb der Sendepause T4 sendet die Quelle 2 keine Impulse aus.

In Fig. 4 ist des Weiteren ein Verlauf 32 dargestellt, welcher den Betrieb des Verstärkers 20 symbolisiert. Während des Zeitintervalls T3 und somit während des Messzyklus ist der Verstärker 20 mit der Versorgungsspannung UV versorgt und somit aktiviert. Nach Abschluss des Messzyklus, also zum Zeitpunkt T2, folgt dann ein Messzeitintervall T5, welches bis zu einem weiteren Zeitpunkt T6 dauert. In diesem Messzeitintervall T5 kann das Rauschen der Empfangssignale 22 mittels einer Messeinrichtung 33 (Fig. 3) erfasst werden. Zum Zeitpunkt T6 wird dann der Schalter 29 geöffnet und der Verstärker 20 von der Versorgungsspannung UV getrennt. Es folgt ein Abschaltzeitintervall T7, währenddessen der Verstärker 20 abgeschaltet bleibt, und zwar bis zum Zeitpunkt T8, zu welchem der Schalter 29 wieder geschlossen wird. Zwischen den Zeitpunkten T8 und T1' liegt eine Anlaufphase des Verstärkers 20, welche zur Aktivierung des Verstärkers 20 benötigt wird.

Das Messzeitintervall T5 kann auch unmittelbar vor dem Messzyklus und somit unmittelbar vor dem Zeitpunkt T1' liegen, wobei dann selbstverständlich noch die Anlaufphase des Verstärkers 20 berücksichtigt wird.

Wie aus Fig. 4 hervorgeht, ist der Verstärker 20 innerhalb des Abschaltzeitintervalls T7 abgeschaltet und verbraucht somit keine elektrische Energie. Somit kann die Leistungsaufnahme des Verstärkers 20 im Vergleich zum Stand der Technik deutlich reduziert werden. Es reduziert sich somit auch die Wärmeerzeugung durch den Verstärker 20.

Die Sendepause T4 setzt sich somit vorzugsweise ausschließlich aus dem Abschaltzeitintervall T7 und dem Messzeitintervall T5 zusammen, in welchem der Rauschpegel der Empfangssignale 22 gemessen wird. Die Aufteilung der Sendepause T4 zwischen das Messzeitintervall T5 und das Abschaltzeitintervall T7 kann fest vorgegeben oder aber zufällig im Betrieb bestimmt werden. Auch die Sendepausen T4, innerhalb deren das Rauschen gemessen bzw. der Verstärker 20 abgeschaltet wird, können entweder fest vorgegeben oder aber zufällig bestimmt werden. So kann der Verstärker 20 beispielsweise in jeder oder jeder n-ten Sendepause T4 abgeschaltet werden, wobei n in einem Wertebereich von 2 bis 10 liegen kann.

In einem Ausführungsbeispiel kann die Zeitdauer des Messzyklus bzw. des Zeitintervalls T3 und somit die Zeitdauer, welche das Abtastelement 3 ausgehend von der Anfangswinkelstellung α1 bis zur Endwinkelstellung α2 benötigt, beispielsweise 16,11 ms betragen. Die Dauer des Rücklaufs des Abtastelements 3 über 215° beträgt beispielsweise 23,89 ms, was auch der Zeitdauer der Sendepause T4 entspricht. Das Messzeitintervall T5 ist vorzugsweise deutlich kürzer als das Abschaltzeitintervall T7. Die Länge des Abschaltzeitintervalls T7 kann beispielsweise der Länge des Messzyklus T3 entsprechen oder sogar ein wenig größer sein. Beispielsweise kann die Länge des Abschaltzeitintervalls T7 auch der Summe der beiden Zeitintervalle T3 + T5 entsprechen.

## Patentansprüche

1. Abtastende optoelektronische Detektionseinrichtung (1) für ein Kraftfahrzeug (14), mit einem optischen Sender (2, 3) zum Aussenden elektromagnetischer Strahlen (4) in einen Umgebungsbereich (11) des Kraftfahrzeugs (14), mit einem optischen Empfänger (13), der zumindest einen Photodetektor (18, 19) zum Empfangen von in dem Umgebungsbereich (11) reflektierten Strahlen (12) und zum Bereitstellen eines elektrischen Empfangssignals (21) abhängig von den empfangenen Strahlen (12) sowie einen Verstärker (20) zum Verstärken des elektrischen Empfangssignals (21) aufweist, mit einer elektronischen Auswerteeinrichtung (23) zum Detektieren eines Zielobjekts (15) in dem Umgebungsbereich (11) abhängig von dem verstärkten Empfangssignal (22), und mit einer Spannungsversorgungseinrichtung (26) zum Bereitstellen einer elektrischen Versorgungsspannung (UV) für den Empfänger (13), wobei der Sender (2, 3) dazu ausgebildet ist, innerhalb eines Messzyklus (T3) der Detektionseinrichtung (1) für eine Vielzahl von Abtastwinkeln innerhalb eines Abtastwinkelbereichs (8) jeweils einen Sendestrahl (4) auszusenden, und wobei nach jedem Messzyklus (T3) jeweils eine Sendepause (T4) vorgegebener Zeitdauer folgt, **dadurch gekennzeichnet, dass** die Detektionseinrichtung (1) Trennmittel (28, 29) aufweist, die dazu ausgebildet sind, für zumindest ein Abschaltzeitintervall (T7) während einer Sendepause (T4) im Betrieb der Detektionseinrichtung (1) zumindest eine Komponente (18, 19, 20) des Empfängers (13) von der Versorgungsspannung (UV) elektrisch zu trennen, wobei die Detektionseinrichtung (1) eine Messeinrichtung (33) zum Erfassen eines Rauschpegels des Empfangssignals (21, 22) aufweist, und die Messeinrichtung (33) dazu ausgelegt ist, den Rauschpegel während zumindest eines von dem Abschaltzeitintervall (T7) verschiedenen Messzeitintervalls (T5) innerhalb einer Sendepause (T4) zu erfassen, und wobei der Sender (2, 3) ein drehbar gelagertes bewegliches Abtastelement (3), insbesondere einen Umlenkspiegel, zum Ausrichten der Sendestrahlen (4) aufweist, welches von einer Anfangswinkelstellung (α1), welche einem ersten Abtastwinkel (9) des Abtastwinkelbereichs (8) entspricht, in eine Endwinkelstellung (α2), welche einem letzten Abtastwinkel (10) des Abtastwinkelbereichs (8) entspricht, bewegbar ist, wobei das Abtastelement (3) um eine Drehachse (5) drehbar gelagert ist und schrittweise um die Drehachse (5) herum und vollständig umlaufend gedreht wird, wobei die jeweilige Sendepause (T4) durch eine Zeitdauer vorgegeben ist, während welcher das bewegliche Abtastelement (3) von der Endwinkelstellung (α2) in die Anfangswinkelstellung (α1) bewegbar ist.

2. Detektionseinrichtung (1) nach Anspruch 1,
**dadurch gekennzeichnet, dass**
die Trennmittel (28, 29) dazu ausgebildet sind, den Verstärker (20) als Komponente (18, 19, 20) des Empfängers (13) von seiner elektrischen Versorgungsspannung (UV) zu trennen.

3. Detektionseinrichtung (1) nach einem der vorhergehenden Ansprüche,
**dadurch gekennzeichnet, dass**
die Trennmittel (28, 29) dazu ausgebildet sind, für eine überwiegende Zeitdauer der Sendepause (T4) die Komponente (18, 19, 20) von der Versorgungsspannung (UV) elektrisch zu trennen.

4. Detektionseinrichtung (1) nach einem der vorhergehenden Ansprüche,
**dadurch gekennzeichnet, dass**
die Trennmittel (28, 29) dazu ausgebildet sind, innerhalb vorbestimmter Sendepausen (T4), insbesondere während jeder oder jeder n-ten Sendepause (T4), oder innerhalb zufällig im Betrieb bestimmter Sendepausen (T4) die Komponente (18, 19, 20) jeweils für zumindest ein Abschaltzeitintervall (T7) von der Versorgungsspannung (UV) elektrisch zu trennen.

5. Detektionseinrichtung (1) nach einem der vorhergehenden Ansprüche,
**dadurch gekennzeichnet, dass**
das Abschaltzeitintervall (T7), insbesondere mit seiner Länge und/oder seinem Anfangszeitpunkt (T6) innerhalb der Sendepause (T4), ein vorgegebenes Zeitintervall ist.

6. Detektionseinrichtung (1) nach einem der Ansprüche 1 bis 5,
**dadurch gekennzeichnet, dass**
die Trennmittel (28, 29) dazu ausgebildet sind, das Abschaltzeitintervall (T7), insbesondere seine Länge und/oder seinen Anfangszeitpunkt (T6) innerhalb der Sendepause (T4), zufällig zu bestimmen.

7. Detektionseinrichtung (1) nach einem der vorhergehenden Ansprüche,
**dadurch gekennzeichnet, dass**
die Messeinrichtung (33) dazu ausgelegt ist, den Rauschpegel immer dann während einer Sendepause (T4) zu erfassen, wenn kein Abschaltzeitintervall (T7) momentan vorliegt.

8. Detektionseinrichtung (1) nach einem der vorhergehenden Ansprüche,
**dadurch gekennzeichnet, dass**
sich das Messzeitintervall (T5) an den Messzyklus (T3) zeitlich unmittelbar anschließt.

9. Kraftfahrzeug (14) mit einer Detektionseinrichtung (1) nach einem der vorhergehenden Ansprüche.

10. Verfahren zum Betreiben einer abtastenden optoelektronischen Detektionseinrichtung (1) eines Kraftfahrzeugs (14), bei welchem mittels eines optischen Senders (2, 3) elektromagnetische Strahlen (4) in einen Umgebungsbereich (11) des Kraftfahrzeugs (14) ausgesendet werden, mittels zumindest eines Photodetektors (18, 19) eines optischen Empfängers (13) in dem Umgebungsbereich (11) reflektierte Strahlen (12) empfangen und ein elektrisches Empfangssignal (21) abhängig von den empfangenen Strahlen (12) bereitgestellt wird, mittels eines Verstärkers (20) des Empfängers (13) das elektrische Empfangssignal (21) verstärkt wird, mittels einer elektronischen Auswerteeinrichtung (23) ein Zielobjekt (15) in dem Umgebungsbereich (11) abhängig von dem verstärkten Empfangssignal (22) detektiert wird, und mittels einer Spannungsversorgungseinrichtung (26) eine elektrische Versorgungsspannung (UV) für den Empfänger (13) bereitgestellt wird, wobei der Sender (2, 3) innerhalb eines einzelnen Messzyklus (T3) der Detektionseinrichtung (1) für eine Vielzahl von Abtastwinkeln innerhalb eines Abtastwinkelbereichs (8) jeweils einen Sendestrahl (4) aussendet, und wobei nach jedem Messzyklus (T3) jeweils eine Sendepause (T4) vorgegebener Zeitdauer folgt, **dadurch gekennzeichnet, dass** für zumindest ein Abschaltzeitintervall (T7) während einer Sendepause (T4) im Betrieb der Detektionseinrichtung (1) der Empfänger (13) von der Versorgungsspannung (UV) elektrisch getrennt wird, wobei mittels einer Messeinrichtung (33) ein Rauschpegel des Empfangssignals (21, 22) erfasst wird, wobei der Rauschpegel während zumindest eines von dem Abschaltzeitintervall (T7) verschiedenen Messzeitintervalls (T5) innerhalb einer Sendepause (T4) erfasst wird, und wobei der Sender (2, 3) ein drehbar gelagertes bewegliches Abtastelement (3), insbesondere einen Umlenkspiegel, zum Ausrichten der Sendestrahlen (4) aufweist, welches von einer Anfangswinkelstellung (α1), welche einem ersten Abtastwinkel (9) des Abtastwinkelbereichs (8) entspricht, in eine Endwinkelstellung (α2), welche einem letzten Abtastwinkel (10) des Abtastwinkelbereichs (8) entspricht, bewegbar ist, wobei das Abtastelement (3) um eine Drehachse (5) drehbar gelagert ist und schrittweise um die Drehachse (5) herum und vollständig umlaufend gedreht wird, wobei die jeweilige Sendepause (T4) durch eine Zeitdauer vorgegeben ist, während welcher das bewegliche Abtastelement (3) von der Endwinkelstellung (α2) in die Anfangswinkelstellung (α1) bewegbar ist.

## Claims

1. Scanning optoelectronic detection device (1) for a motor vehicle (14), having an optical transmitter (2, 3) for emitting electromagnetic beams (4) into a surrounding area (11) of the motor vehicle (14), having an optical receiver (13) that has at least one photodetector (18, 19) for receiving beams (12) reflected in the surrounding area (11) and for providing an electrical reception signal (21) in dependence on the received beams (12) and an amplifier (20) for amplifying the electrical reception signal (21), having an electronic evaluation device (23) for detecting a target object (15) in the surrounding area (11) in dependence on the amplified reception signal (22), and having a voltage supply device (26) for providing an electrical supply voltage (UV) for the receiver (13), wherein the transmitter (2, 3) is configured to emit in each case one transmission beam (4) within a measurement cycle (T3) of the detection device (1) for a multiplicity of scanning angles within a scanning angle range (8), and wherein each measurement cycle (T3) is followed in each case by a transmission break (T4) of a specified time duration, **characterized in that** the detection device (1) has isolating means (28, 29) that are configured to electrically isolate at least one component (18, 19, 20) of the receiver (13) from the supply voltage (UV) for at least one switch-off interval (T7) during a transmission break (T4) during operation of the detection device (1), wherein the detection device (1) has a measurement device (33) for capturing a noise level of the reception signal (21, 22), and the measurement deice (33) is configured to capture the noise level during at least one measurement time interval (T5), which differs from the switch-off time interval (T7), within a transmission break (T4), and wherein the transmitter (2, 3) has a rotatably mounted moveable scanning element (3), in particular a deflection mirror, for directing the transmission beams (4), which scanning element is movable from a starting angle position (α1), corresponding to a first scanning angle (9) of the scanning angle range (8), into an end angle position (α2), corresponding to a last scanning angle (10) of the scanning angle range (8), wherein the scanning element (3) is mounted rotatably about an axis of rotation (5) and is rotated incrementally about the axis of rotation (5) and all the way around, wherein the respective transmission break (T4) is specified by a time duration during which the movable scanning element (3) is movable from the end angle position (α2) into the starting angle position (α1).

2. Detection device (1) according to Claim 1,
**characterized in that**
the isolating means (28, 29) are configured to isolate the amplifier (20) as a component (18, 19, 20) of the receiver (13) from the electrical supply voltage (UV) thereof.

3. Detection device (1) according to one of the preceding claims,
**characterized in that**
the isolating means (28, 20) are configured to electrically isolate the component (18, 19, 20) from the supply voltage (UV) for a predominant time duration of the transmission break (T4).

4. Detection device (1) according to one of the preceding claims, **characterized in that**
the isolating means (28, 29) are configured to electrically isolate, within predetermined transmission breaks (T4), in particular during every or every n-th transmission break (T4), or within transmission breaks (T4) that were determined randomly during operation, the component (18, 19, 20) from the supply voltage (UV) in each case for at least one switch-off time interval (T7).

5. Detecting device (1) according to one of the preceding claims,
**characterized in that**
the switch-off time interval (T7), in particular with its length and/or its starting time point (T6) within the transmission break (T4), is a specified time interval.

6. Detection device (1) according to one of Claims 1 to 5,
**characterized in that**
the isolating means (28, 29) are configured to randomly determine the switch-off time interval (T7), in particular its length and/or its starting time point (T6) within the transmission break (T4).

7. Detection device (1) according to one of the preceding claims,
**characterized in that**
the measurement device (33) is configured to capture the noise level during a transmission break (T4) whenever there is no switch-off time interval (T7) currently taking place.

8. Detection device (1) according to one of the preceding claims, **characterized in that** the measurement time interval (T5) immediately follows in terms of time the measurement cycle (T3).

9. Motor vehicle (14) having a detection device (1) according to one of the preceding claims.

10. Method for operating a scanning optoelectronic detection device (1) of a motor vehicle (14), wherein electromagnetic beams (4) are emitted into a surrounding region (11) of the motor vehicle (14) by way of an optical transmitter (2, 3), beams (12) reflected in the surrounding area (11) are received by way of at least one photodetector (18, 19) of an optical receiver (13) and an electrical reception signal (21) is provided in dependence on the received beams (12), the electrical reception signal (21) is amplified by way of an amplifier (20) of the receiver (13), a target object (15) in the surrounding area (11) is detected in dependence on the amplified reception signal (22) by way of an electronic evaluation device (23), and an electrical supply voltage (UV) is provided for the receiver (13) by way of a voltage supply device (26), wherein the transmitter (2, 3) emits in each case one transmission beam (4) within an individual measurement cycle (T3) of the detection device (1) for a multiplicity of scanning angles within a scanning angle range (8), and wherein each measurement cycle (T3) is followed in each case by a transmission break (T4) of a specified time duration, **characterized in that**, for at least one switch-off time interval (T7) during a transmission break (T4) during operation of the detection device (1), the receiver (13) is electrically isolated from the supply voltage (UV), wherein a noise level of the reception signal (21, 22) is captured by way of a measurement device (33), wherein the noise level during at least one measurement time interval (T5), which differs from the switch-off time interval (T7), within a transmission break (T4) is captured, and wherein the transmitter (2, 3) has a rotatably mounted movable scanning element (3), in particular a deflection mirror, for directing the transmission beams (4), which scanning element is movable from a starting angle position (α1), corresponding to a first scanning angle (9) of the scanning angle range (8), into an end angle position (α2), corresponding to a last scanning angle (10) of the scanning angle range (8), wherein the scanning element (3) is mounted rotatably about an axis of rotation (5) and is rotated incrementally about the axis of rotation (5) and all the way around, wherein the respective transmission break (T4) is specified by a time duration during which the movable scanning element (3) is movable from the end angle position (α2) into the starting angle position (α1).

## Revendications

1. Dispositif de détection (1) optoélectronique par balayage pour un véhicule automobile (14), comprenant un émetteur optique (2, 3) destiné à émettre des rayons électromagnétiques (4) dans une zone environnante (11) du véhicule automobile (14), comprenant un récepteur optique (13), qui possède au moins un photodétecteur (18, 19) destiné à recevoir des rayons (12) réfléchis dans la zone environnante (11) et à délivrer un signal de réception (21) électrique dépendant des rayons (12) reçus ainsi qu'un amplificateur (20) destiné à amplifier le signal de réception (21) électrique, comprenant un dispositif d'interprétation (23) électronique destiné à détecter un objet cible (15) dans la zone environnante (11) en fonction du signal de réception amplifié (22) et comprenant un dispositif d'alimentation électrique (26) destiné à délivrer une tension d'alimentation (UV) électrique pour le récepteur (13), l'émetteur (2, 3) étant conçu pour émettre, à l'intérieur d'un cycle de mesure (T3) du dispositif de détection (1), respectivement un rayon émis (4) pour une pluralité d'angles de balayage à l'intérieur d'une plage angulaire de balayage (8), et une pause d'émission (T4) ayant une durée prédéfinie suivant respectivement chaque cycle de mesure (T3), **caractérisé en ce que** le dispositif de détection (1) possède des moyens de séparation (28, 29) qui sont configurés pour, pendant une pause d'émission (T4) en fonctionnement du dispositif de détection (1), séparer électriquement au moins un composant (18, 19, 20) du récepteur (13) de la tension d'alimentation (UV) pendant au moins un intervalle de temps de mise hors circuit (T7), le dispositif de détection (1) possédant un dispositif de mesure (33) destiné à acquérir un niveau de bruit du signal de réception (21, 22), et le dispositif de mesure (33) étant conçu pour acquérir le niveau de bruit pendant au moins un intervalle de temps de mesure (T5) différent de l'intervalle de temps de mise hors circuit (T7) à l'intérieur d'une pause d'émission (T4), et l'émetteur (2, 3) possédant un élément de balayage (3) mobile monté à rotation, notamment un miroir de renvoi, destiné à orienter les rayons émis (4), lequel peut être déplacé depuis une position angulaire de départ (α1), laquelle correspond à un premier angle de balayage (9) de la plage angulaire de balayage (8), dans une position angulaire finale (α2), laquelle correspond à un dernier angle de balayage (10) de la plage angulaire de balayage (8), l'élément de balayage (3) étant monté à rotation autour d'un axe de rotation (5) et étant mis en rotation autour de l'axe de rotation (5) par palier et en effectuant un mouvement tournant complet, la pause d'émission (T4) respective étant prédéfinie par une durée pendant laquelle l'élément de balayage (3) mobile peut être déplacé de la position angulaire finale (α2) dans la position angulaire de départ (α1).

2. Dispositif de détection (1) selon la revendication 1, **caractérisé en ce que** les moyens de séparation (28, 29) sont configurés pour séparer l'amplificateur (20) en tant que composant (18, 19, 20) du récepteur (13) de sa tension d'alimentation (UV) électrique.

3. Dispositif de détection (1) selon l'une des revendications précédentes, **caractérisé en ce que** les moyens de séparation (28, 29) sont configurés pour séparer électriquement le composant (18, 19, 20) de la tension d'alimentation (UV) pendant une durée principale de la pause d'émission (T4).

4. Dispositif de détection (1) selon l'une des revendications précédentes, **caractérisé en ce que** les moyens de séparation (28, 29) sont configurés pour séparer électriquement le composant (18, 19, 20) de la tension d'alimentation (UV) respectivement pendant au moins un intervalle de temps de mise hors circuit (T7) à l'intérieur de pauses d'émission (T4) prédéterminées, notamment pendant chaque ou chaque n-ème pause d'émission (T4), ou à l'intérieur de pauses d'émission (T4) déterminées aléatoirement en fonctionnement.

5. Dispositif de détection (1) selon l'une des revendications précédentes, **caractérisé en ce que** l'intervalle de temps de mise hors circuit (T7) est un intervalle de temps prédéfini, notamment avec sa durée et/ou son instant de début (T6) à l'intérieur de la pause d'émission (T4).

6. Dispositif de détection (1) selon l'une des revendications 1 à 5, **caractérisé en ce que** les moyens de séparation (28, 29) sont configurés pour déterminer aléatoirement l'intervalle de temps de mise hors circuit (T7), notamment sa durée et/ou son instant de début (T6) à l'intérieur de la pause d'émission (T4).

7. Dispositif de détection (1) selon l'une des revendications précédentes, **caractérisé en ce que** le dispositif de mesure (33) est conçu pour acquérir le niveau de bruit toujours pendant une pause d'émission (T4) quand aucun intervalle de temps de mise hors circuit (T7) n'est momentanément présent.

8. Dispositif de détection (1) selon l'une des revendications précédentes, **caractérisé en ce que** l'intervalle de temps de mesure (T5) se rattache temporellement directement au cycle de mesure (T3).

9. Véhicule automobile (14) équipé d'un dispositif de détection (1) selon l'une des revendications précédentes.

10. Procédé pour faire fonctionner un dispositif de détection (1) optoélectronique par balayage d'un véhicule automobile (14), selon lequel des rayons électromagnétiques (4) sont émis au moyen d'un émetteur optique (2, 3) dans une zone environnante (11) du véhicule automobile (14), des rayons (12) réfléchis dans la zone environnante (11) sont reçus au moyen d'au moins un photodétecteur (18, 19) d'un récepteur optique (13) et un signal de réception (21) électrique dépendant des rayons (12) reçus est délivré, le signal de réception (21) électrique est amplifié au moyen d'un amplificateur (20) du récepteur (13), un objet cible (15) est détecté dans la zone environnante (11) en fonction du signal de réception amplifié (22) au moyen d'un dispositif d'interprétation (23) électronique et une tension d'alimentation (UV) électrique est délivrée pour le récepteur (13) au moyen d'un dispositif d'alimentation électrique (26), l'émetteur (2, 3) émettant, à l'intérieur d'un cycle de mesure (T3) individuel du dispositif de détection (1), respectivement un rayon émis (4) pour une pluralité d'angles de balayage à l'intérieur d'une plage angulaire de balayage (8), et une pause d'émission (T4) ayant une durée prédéfinie suivant respectivement chaque cycle de mesure (T3), **caractérisé en ce que** le récepteur (13) est séparé électriquement de la tension d'alimentation (UV) pendant au moins un intervalle de temps de mise hors circuit (T7) pendant une pause d'émission (T4) en fonctionnement du dispositif de détection (1), un niveau de bruit du signal de réception (21, 22) étant acquis au moyen d'un dispositif de mesure (33), le niveau de bruit étant acquis pendant au moins un intervalle de temps de mesure (T5) différent de l'intervalle de temps de mise hors circuit (T7) à l'intérieur d'une pause d'émission (T4), et l'émetteur (2, 3) possédant un élément de balayage (3) mobile monté à rotation, notamment un miroir de renvoi, destiné à orienter les rayons émis (4), lequel peut être déplacé depuis une position angulaire de départ (α1), laquelle correspond à un premier angle de balayage (9) de la plage angulaire de balayage (8), dans une position angulaire finale (α2), laquelle correspond à un dernier angle de balayage (10) de la plage angulaire de balayage (8), l'élément de balayage (3) étant monté à rotation autour d'un axe de rotation (5) et étant mis en rotation autour de l'axe de rotation (5) par palier et en effectuant un mouvement tournant complet, la pause d'émission (T4) respective étant prédéfinie par une durée pendant laquelle l'élément de balayage (3) mobile peut être déplacé de la position angulaire finale (α2) dans la position angulaire de départ (α1).
